# EUROPÄISCHE PATENTSCHRIFT

(11) **EP 4 073 607 B1**
(45) Veröffentlichungstag und Bekanntmachung des Hinweises auf die Patenterteilung: **01.01.2025**
(21) Anmeldenummer: 20811587.3
(22) Anmeldetag: 20.11.2020
(51) Int. Cl.: G05B 23/02

(54) **VERFAHREN ZUM KOMPENSIEREN EINER FEHLFUNKTION EINES FELDGERÄTS IN EINER ANLAGE DER AUTOMATISIERUNGSTECHNIK**
METHOD FOR COMPENSATING FOR A MALFUNCTION OF A FIELD DEVICE IN AN AUTOMATION TECHNOLOGY PLANT
PROCÉDÉ DE COMPENSATION D'UN DYSFONCTIONNEMENT D'UN APPAREIL DE TERRAIN DANS UNE INSTALLATION DE TECHNOLOGIE D'AUTOMATISATION

(30) Priorität: 11.12.2019 DE 102019134023
(43) Veröffentlichungstag der Anmeldung: 19.10.2022
(73) Patentinhaber: Endress+Hauser Process Solutions AG, 4153 Reinach (CH)
(72) Erfinder: BRAUN, Marco, 85737 Ismaning (DE); FRANKE, Alexander, 4127 Birsfelden (CH); FRÜHAUF, Dietmar, 79539 Lörrach (DE)
(74) Vertreter: Trenkle, Dennis
(86) Internationale Anmeldenummer: PCT/EP2020/082909
(87) Internationale Veröffentlichungsnummer: WO 2021/115762

(56) Entgegenhaltungen:
- WO-A1-01/48571
- DE-A1- 10 135 586
- DE-A1- 102016 124 350

## Beschreibung

Die Erfindung betrifft ein Verfahren zum Kompensieren einer Fehlfunktion eines Feldgeräts in einer Anlage der Automatisierungstechnik, wobei in der Anlage eine Vielzahl von Feldgeräten vorgesehen ist, wobei jedes der Feldgeräte zumindest eine Sensoreinheit aufweist, welche zum Erheben von zumindest einer Prozessgröße ausgestaltet ist, wobei die Feldgeräte in einem Kommunikationsnetzwerk eingebunden sind und mit einer übergeordneten Einheit, sowie untereinander kommunizieren, und wobei die Feldgeräte die erhobenen Prozesswerte, Diagnosedaten und Statusinformationen über das Kommunikationsnetzwerk an die übergeordnete Einheit übermitteln.

Aus dem Stand der Technik sind bereits Feldgeräte bekannt geworden, die in industriellen Anlagen der Automatisierungstechnik zum Einsatz kommen. In der Prozessautomatisierung ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensoreinheiten. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung). Die übergeordneten Einheiten dienen unter anderem zur Prozesssteuerung, sowie zur Inbetriebnahme der Feldgeräte. Die von den Feldgeräten, insbesondere von den Sensoreinheiten, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Der Ausfall eines Feldgeräts bedeutet mitunter einen hohen Kosten- und Zeitaufwand. Insbesondere in kritischen Prozessen muss - bis das Feldgerät repariert oder ausgetauscht worden ist - der betreffende Anlagenteil heruntergefahren werden. Als Alternative dazu werden oftmals im Vorfeld Redundanzen in den betreffenden Anlagenteil eingebaut. Hierbei handelt es sich in der Regel um zu den eingesetzten Feldgeräten identische Feldgeräte, welche im Fehlerfall ein betreffendes Feldgerät ersetzen. Der Zeitpunkt eines Feldgeräts ist häufig nicht abzusehen, so dass ein Ausfall mitunter plötzlich auftreten kann.

Die DE 101 35 586 A1 beschreibt ein Rekonfigurations-Verfahren zur Kompensation von Ausfällen eines Sensorsystems, das zumindest einen Sensor zur Messung von System-Zuständen eines Anwendungssystems und zumindest ein Systemmodell zur Beschreibung des Anwendungssystems unter Bildung zumindest eines ersten Beobachters zur Schätzung von System-Zuständen aufweist.

Die WO 01/48571 A1 beschreibt ein Verfahren zur Erkennung, Identifizierung und Klassifizierung von Fehlern, die in Sensoren zur Messung eines Prozesses auftreten.

Die DE 10 2016 124 350 A1 offenbart ein Verfahren, bei welchen Daten mittels eines Gateways von einem Feldgerät ausgelesen, vom Gateway an ein Servicegerät übermittelt und von dem Servicegerät an eine Managementapplikation übermittelt werden.

Ausgehend von dieser Problematik liegt der Erfindung die Aufgabe zugrunde, ein Verfahren vorzustellen, welches es erlaubt, die Instandhaltung einer Anlage der Automatisierungstechnik zu erleichtern.

Die Erfindung wird durch ein Verfahren zum Kompensieren einer Fehlfunktion eines Feldgeräts in einer Anlage der Prozessautomatisierung gemäß Anspruch 1 definiert. Weitere bevorzugte Ausführungsformen werden in den abhängigen Ansprüchen definiert.

Die Aufgabe wird durch ein Verfahren zum Kompensieren einer Fehlfunktion eines Feldgeräts in einer Anlage der Prozessautomatisierung, wobei in der Anlage (A) eine Vielzahl von Feldgeräten vorgesehen ist, wobei jedes der Feldgeräte zumindest eine Sensoreinheit aufweist, welche zum Erheben von zumindest einer Prozessgröße ausgestaltet ist, wobei die Feldgeräte in zumindest einer Messstelle eingruppiert sind, wobei die Feldgeräte in einem Kommunikationsnetzwerk eingebunden sind und mit einer übergeordneten Einheit kommunizieren, wobei die Feldgeräte die erhobenen Prozesswerte, Diagnosedaten und Statusinformationen über das Kommunikationsnetzwerk an die übergeordnete Einheit übermitteln, wobei die übergeordnete Einheit die erhobenen Prozesswerte, Diagnosedaten und Statusinformationen an eine Leitstelle der Anlage übermittelt und wobei jede Messstelle eine Datenverarbeitungseinheit umfasst, welche jeweils im Kommunikationsnetzwerk zwischen den Feldgeräten der entsprechenden Messstelle und der übergeordneten Einheit angeordnet ist, umfassend:
- Mithören der von den Feldgeräten an die übergeordnete Einheit übermittelten Prozesswerte mittels der Datenverarbeitungseinheit;
- Erstellen von Historiendaten auf Basis der übermittelten Prozesswerte für jedes der Feldgeräte mittels der Datenverarbeitungseinheit;
- Etablieren eines Ersetzungssystems auf Basis der Historiendaten, wobei die Datenverarbeitungseinheit im Zuge des Etablierens des Ersetzungssystems ermittelt, welche Prozessgröße einer Sensoreinheit eine Prozessgröße einer weiteren Sensoreinheit mit einer vorbestimmten Genauigkeit als Ersatzgröße ersetzen kann;
- Vergleichen der aktuellen Prozesswerte von jedem der Feldgeräte mit Sollwerten, welche Sollwerte durch die Historiendaten und/oder durch vorab festgelegte Referenzwerte gebildet sind, zum Vorberechnen von Zeiträumen, in denen die aktuellen Prozesswerte eines jeweiligen Feldgeräts um zumindest einen vorbestimmten Wert von den Sollwerten abweichen;
- Übermitteln der Ersatzgröße für das jeweilige Feldgerät an die übergeordnete Einheit mittels der Datenverarbeitungseinheit während den vorberechneten Zeiträumen.

Der große Vorteil des erfindungsgemäßen Verfahrens besteht darin, dass Ausfälle eines Feldgeräts, bzw. dessen Sensoreinheiten zeitlich vorhergesehen und auf einfache Art und Weise aufgefangen werden können. Anstatt ein redundantes Ersatzgerät vorzuhalten wird von der jeweiligen Datenverarbeitungseinheit selbstständig diejenigen Zeiträume vorausschauend ermittelt, in welchen ein Feldgerät, bzw. dessen Sensoreinheit ausfällt und zusätzlich eine Ersatzgröße für die ausfallende Prozessgröße bestimmt. Dies gilt für die jeweilige Messstelle, so dass also ein Feldgerät einer Messstelle ein weiteres Feldgerät der Messstelle ersetzen kann. Auch kann vorgesehen sein, dass die Datenverarbeitungseinheiten über das Kommunikationsnetzwerk kommunizieren, so dass auch Feldgeräte verschiedener Messstellen füreinander Ersatzgrößen anbieten können. Die Ersatzgröße wird von der Dateneinheit beginnend mit dem ermittelten Zeitraum solange an die übergeordnete Einheit übermittelt, bis der Zeitraum beendet ist oder bis ein Benutzer die Übermittlung beendet. Das ausgefallene Feldgerät, bzw. dessen Sensoreinheit kann in der Zwischenzeit repariert oder ausgetauscht werden, ohne dass der betroffene Anlagenteil heruntergefahren und der Prozess unterbrochen werden muss, wodurch die Verfügbarkeit des Prozesses erhöht wird.

Die Ersatzgröße kann auch aus einer Kombination von mehreren Prozessgrößen von einer oder mehreren Sensoreinheiten gebildet werden. Beispielsweise können anstatt eines ausgefallenen radarbasierten Füllstandmessgeräts die Prozessgrößen mehrerer Grenzschalter oder Druckmessgeräte kombiniert werden, um eine Ersatzgröße für den Füllstand in einem Tank zu erhalten.

Die gewünschte Genauigkeit der Ersatzgröße im Vergleich zu der ausgefallenen Prozessgröße kann vom Benutzer im Vorfeld festgelegt werden. Dadurch werden Feldgeräte, bzw. Sensorsysteme, deren erfasste Prozessgrößen zu sehr von dem ausgefallenen Feldgerät abweichen, nicht berücksichtigt.

Auf diese Art und Weise kann beispielsweise ein Temperatursensor einen ausgefallenen Temperatursensor ersetzen. Die Datenverarbeitungseinheit hat Kenntnis von der Art der erfassten Prozesswerte aller Feldgeräte, bzw. deren Sensoreinheiten, und deren typischen Größen. Beispiele für Feldgeräte und deren Sensoreinheiten, die im Zusammenhang mit dem erfindungsgemäßen Verfahren genannt werden, sind bereits im einleitenden Teil der Beschreibung beispielhaft beschrieben worden.

Bei den Datenverarbeitungseinheiten handelt es sich um elektronische Geräte, welche mit dem Kommunikationsnetzwerk verbindbar sind und welche jeweils eine Elektronikeinheit aufweisen, enthaltend beispielsweise einen Mikroprozessor und eine Speichereinheit, welche zum Verarbeiten der aus dem Kommunikationsnetzwerk erhaltenen Daten geeignet ist. Beispielsweise handelt es sich bei der Datenverarbeitungseinheit um einen Industrie-PC oder um ein Gateway/einen Switch.

Es kann vorgesehen sein, dass als Kommunikationsnetzwerk ein drahtgebundenes, insbesondere ein Ethernet-basiertes, Kommunikationsnetzwerk verwendet wird. Es kann sich hierbei auch um einen Feldbus der Automatisierungstechnik handeln, beispielsweise basierend auf einem der Protokolle HART, Profibus PA/DP, Foundation Fieldbus, etc. Es kann auch vorgesehen sein, dass das Kommunikationsnetzwerk aus mehreren Teilsegmenten besteht, welche unter Umständen auf unterschiedlichen Protokollen basieren.

Alternativ kann vorgesehen sein, dass als Kommunikationsnetzwerk ein drahtloses Kommunikationsnetzwerk verwendet wird. Insbesondere basiert dieses auf dem WLAN-, bzw. WiFi-Standard. Alternativ kann jeder weitere gebräuchliche Drahtlosstandard verwendet werden.

Gemäß einer vorteilhaften Ausgestaltung des erfindungsgemäßen Verfahrens ist vorgesehen, dass der Gerätestatus der Feldgeräte und/oder der Sensoreinheiten an die übergeordnete Einheit übermittelt werden, insbesondere ständig oder zu festgelegten Zeitpunkten, und wobei im Falle des Auftretens zumindest eines vorbestimmten Gerätestatus eines Feldgeräts, bzw. einer Sensoreinheit die Ersatzgröße mittels der Datenverarbeitungseinheit an die übergeordnete Einheit übermittelt wird. Beispiele für Gerätestatus, welche das Übermitteln der Ersatzgröße auslösen, sind beispielsweise "Wartung erforderlich" und/oder "Gerät offline". Ein Ausfall eines Feldgeräts, bzw. einer Sensoreinheit kann somit auch dann kompensiert werden, wenn der Ausfall plötzlich eintritt und insbesondere nicht per Abgleich seiner Prozesswerte mit den Sollwerten vorausgesagt werden konnte.

Gemäß einer bevorzugten Weiterbildung des erfindungsgemäßen Verfahrens ist vorgesehen, dass im Zuge des Etablierens des Ersetzungssystems weitere Eigenschaften eines Feldgeräts, bzw. einer Sensoreinheit an die Datenverarbeitungseinheit übermittelt und verglichen werden. Die Genauigkeit der Ersatzgröße wird dadurch erhöht, da nicht nur die reinen Prozessmesswerte der eigentlichen Prozessgröße mit potentiellen Prozessgrößen verglichen werden, sondern weitere Metadaten miteinbezogen werden. Diese weiteren Daten werden in die Berechnung der Genauigkeit einer potentiellen Ersatzgröße miteinbezogen.

In einer vorteilhaften Ausgestaltung des erfindungsgemäßen Verfahrens ist vorgesehen, dass die weiteren Eigenschaften Informationen bezüglich der geografischen Lage des Feldgeräts beinhalten.

In einer bevorzugten Ausgestaltung des erfindungsgemäßen Verfahrens ist vorgesehen, dass die weiteren Eigenschaften Informationen bezüglich der Messstelle, in welche das Feldgerät eingebaut ist, und/oder der Funktion des Feldgeräts in der Messstelle beinhalten.

In einer vorteilhaften Ausgestaltung des erfindungsgemäßen Verfahrens ist vorgesehen, dass die weiteren Eigenschaften von den Feldgeräten an die Datenverarbeitungseinheit übermittelt werden und/oder wobei die weiteren Eigenschaften von einer Serviceplattform an die Datenverarbeitungseinheit übermittelt werden. Beispielsweise können diese Informationen von den Feldgeräten selbst erhoben werden, beispielsweise die Informationen bezüglich der Lage der Feldgeräte. Ein Bediener kann die weiteren Informationen auf der Serviceplattform beispielsweise eingeben oder seine eigenen Datenbanken auf die Serviceplattform aufspielen lassen. Die Serviceplattform ist eine Applikation auf einem Cloud-Server und ist für einen Benutzer per Internet zugänglich, bzw. tauscht mit der Datenverarbeitungseinheit Daten über das Internet aus.

In einer bevorzugten Ausgestaltung des erfindungsgemäßen Verfahrens ist vorgesehen, dass im Zuge des Etablierens des Ersetzungssystems Historiendaten, Lageinformationen und/oder Informationen bezüglich einer Messstelle von Feldgeräten herangezogen werden, welche sich in zu der Anlage verschiedenen, weiteren Anlagen befinden. Hierdurch kann auf das Wissen weiterer Messstellen zugegriffen werden und die Qualität der Ersatzgröße weiter erhöht werden. Diese weiteren Informationen befinden sich ebenfalls auf der Serviceplattform oder auf weiteren Plattformen, welche Schnittstellen zum Datenaustausch mit der Serviceplattform aufweisen.

Erfindungsgemäß verwendet die Datenverarbeitungseinheit einen KI-Algorithmus, insbesondere basierend auf neuronalen Netzwerken, zum Etablieren des Ersetzungssystems und/oder zum Vorberechnen der Zeiträume verwendet. Neben neuronalen Netzwerken können weitere geeignete KI-Algorithmen, beispielsweise basierend auf Deep Learning, verwendet werden.

Erfindungsgemäß wird der KI-Algorithmus vorab auf einer Serviceplattform eingelernt wird und vorab in die Datenverarbeitungseinheit eingespielt. Es kann sich hierbei um die bereits obig beschriebene Serviceplattform, aber auch um einer weitere Serviceplattform handeln. Der Algorithmus wird auf eine Vielzahl von Applikationen und Anwendungen von Feldgeräten eingelernt und lernt somit eine Reihe von Fehlerbildern der Feldgeräte, bzw. der Sensoreinheiten, eventuelle Zusammenhänge zwischen Fehlerbildern und Ausfällen, bzw. deren zeitlichen Verläufen und Zusammenhänge zwischen Prozessgrößen verschiedener Sensoreinheiten untereinander in verschiedenen Applikationen. Nach dem Einlernen wird der so eingelernte Algorithmus in der Datenverarbeitungseinheit integriert.

Gemäß einer vorteilhaften Ausgestaltung des erfindungsgemäßen Verfahrens ist vorgesehen, dass die Schritte des Etablierens des Ersetzungssystems und/oder des Vorberechnens der Zeiträume durchgeführt werden, ohne dass eine Kommunikationsverbindung zwischen der Datenverarbeitungseinheit und der Serviceplattform besteht. Es kann vorgesehen sein, diesen Algorithmus in regelmäßigen oder unregelmäßigen Zeitabständen upzudaten, um neu gelernte Erkenntnisse implementieren zu können und das Vorberechnen bzw. das Ersetzungssystem zu verbessern. Hierzu wird eine Kommunikationsverbindung zwischen der Datenverarbeitungseinheit und der Serviceplattform allerdings benötigt.

Gemäß einer bevorzugten Weiterbildung des erfindungsgemäßen Verfahrens ist vorgesehen, dass die Datenverarbeitungseinheit die Historie der Ersatzgröße mit den Historiendaten des Feldgeräts, bzw. der Sensoreinheit, welche den vorbestimmten Gerätestatus aufweist, vergleicht und eine Abweichung der Ersatzgröße zu den Historiendaten ermittelt. Eine Abweichung resultiert beispielsweise daraus, dass die Sensoreinheit, welche die potentielle Ersatzgröße erfasst, ein anderes Messprinzip als die Sensoreinheit aufweist, welche die zu ersetzende Prozessgröße erfasst. Auch ein anderer Einbauort oder eine andere Kalibrierung der Sensoreinheit, welche die potentielle Ersatzgröße erfasst, kann zu einer Abweichung führen. Die Abweichung kann konstant sein, jedoch kann auch eine nicht-konstante Abweichung, die beispielsweise im Laufe der Zeit vergrößert oder verkleinert ist, detektiert werden.

In einer vorteilhaften Ausgestaltung des erfindungsgemäßen Verfahrens ist vorgesehen, dass die Datenverarbeitungseinheit die Ersatzgröße in Echtzeit um die ermittelte Abweichung korrigiert. Im Falle einer konstanten Abweichung wird die Ersatzgröße um diese konstante Abweichung je nach Bedarf erhöht oder erniedrigt. Im Falle, dass eine nicht-konstante Abweichung vorliegt, wird die zu korrigierende Abweichung vorausberechnet und laufend angepasst.

Gemäß einer bevorzugten Weiterbildung des erfindungsgemäßen Verfahrens ist vorgesehen, dass Datenverarbeitungseinheit Gateway eine Bewertung der ermittelten Ersatzgröße berechnet.

In einer vorteilhaften Ausgestaltung des erfindungsgemäßen Verfahrens ist vorgesehen, dass einem Bediener vor dem Übermitteln der Ersatzgröße die Bewertung der Ersatzgröße bekannt gemacht wird und dass die Ersatzgröße nur dann übermittelt wird, wenn der Bediener diese bestätigt. Die Bewertung der Ersatzgröße wird aus der Genauigkeit der Ersatzgröße und der Abweichung der Ersatzgröße berechnet. Je weniger konstant die Abweichung der Ersatzgröße ist, und dementsprechend schwierig eine zuverlässige Vorhersage der Ersatzgröße ausfällt, desto negativer fällt die Bewertung der Ersatzgröße aus.

In einer bevorzugten Ausgestaltung des erfindungsgemäßen Verfahrens ist vorgesehen, dass die Menge der Historiendaten des Feldgeräts, bzw. der Sensoreinheit, welche den vorbestimmten Gerätestatus aufweist, in das Berechnen der Bewertung miteinfließt. Je mehr Historiendaten eines Feldgeräts, bzw. einer Sensoreinheit vorhanden sind, desto mehr Informationen sind über das Verhalten dieses Feldgeräts, bzw. dieser Sensoreinheit im Betrieb in der Messstelle vorhanden, was die Aussagekraft der Berechnung erhöht.

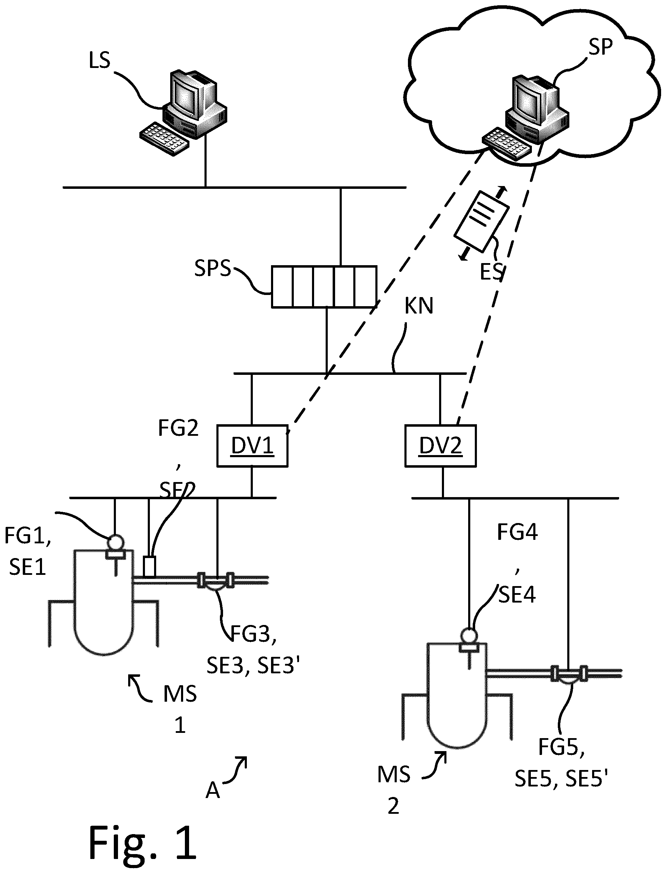

Die Erfindung wird anhand der nachfolgenden Figur näher erläutert. Es zeigt
Fig. 1: ein erstes Ausführungsbeispiel des erfindungsgemäßen Verfahrens.

In Fig. 1 sind Teile einer Anlage Ader Automatisierungstechnik abgebildet. Konkret handelt es sich um zwei Messstellen MS1, MS2. Diese bestehen jeweils aus einem Tank und einer von dem Tank abführenden Rohrleitung. Zur Messung des Füllstands des Tanks als Prozessgröße ist jeweils ein Feldgerät FG1, FG4, beispielsweise ein Füllstandmessgerät mittels eines Radars als Sensoreinheit SE1, SE4, am Tank angebracht. Zur Messung der Durchflussgeschwindigkeit in der Rohrleitung ist jeweils ein Feldgerät FG3, FG5 angebracht, dessen Sensoreinheit SE3, SE5 die Durchflussgeschwindigkeit eines die Rohrleitung durchströmenden Mediums als primäre Prozessgröße nach dem Coriolisprinzip bestimmt. Jedes der Feldgeräte FG3, FG5 verfügt des Weiteren über einen Temperatursensor SE3', SE5` als weitere Sensoreinheit, welche die Temperatur des die Rohrleitung durchströmenden Mediums als sekundäre Prozessgröße erfasst. Des Weiteren ist in der Messstelle MS1 ein weiteres Feldgerät FG2 angebracht, welches die Temperatur des die Rohrleitung durchströmenden Messmediums mittels eines hochpräzisen Temperatursensors SE2 als Sensoreinheit bestimmt.

Die Feldgeräte FG1, ..., FG5 sind untereinander mittels eines Kommunikationsnetzwerks KN verbunden und stehen miteinander in Kommunikationsverbindung. Bei dem Kommunikationsnetzwerk KN handelt es sich insbesondere um ein Ethernet-Netzwerk. Alternativ handelt es sich bei dem Kommunikationsnetzwerk KN um einen Feldbus nach einem der bekannten Feldbusstandards, beispielsweise Profibus, Foundation Fieldbus oder HART.

Das Kommunikationsnetzwerk KN beinhaltet eine übergeordnete Einheit SPS, beispielsweise eine speicherprogrammierbare Steuerung, welche Befehle an die Feldgeräte FG1, ..., FG5 übermittelt, woraufhin die Feldgeräte FG1, ..., FG5 Prozesswerte, Diagnosedaten und Statusinformationen an die übergeordnete Einheit SPS übermitteln. Diese Prozesswerte, Diagnosedaten und Statusinformationen werden von der übergeordneten Einheit SPS an einen Workstation-PC in der Leitstelle LS der Anlage A weitergeleitet. Dieser dient unter anderem zur Prozessvisualisierung, Prozessüberwachung und zum Engineering wie zum Bedienen und Überwachen der Feldgeräten FG1, ..., FG5.

Des Weiteren beinhaltet jede der Messstellen MS1, MS2 eine Datenverarbeitungseinheit DV1, DV2, insbesondere ein Gateway oder ein Industrie-PC, welche die von den in der jeweiligen Messstelle MS1, MS2 enthaltenen Feldgeräte FG1, ..., FG5 an die übergeordnete Einheit SPS übermittelten Prozesswerte, Diagnosedaten und Statusinformationen aufzeichnet.

Über das Internet können die Datenverarbeitungseinheit DV1, DV2 eine Kommunikationsverbindung zu einer Serviceplattform SP etablieren. Die Serviceplattform SP ist dazu ausgestaltet, Applikationen auszuführen. Beispielsweise handelt es sich bei einer solchen Applikation um ein Plant Asset Management-System, welches dem Verwalten der Assets, also dem Inventarbestand, der Anlage A dient.

Im Folgenden sei eine Anwendung des erfindungsgemäßen Verfahrens beschrieben:
Um auf einen Ausfall eines Feldgeräts FG1, ..., FG5, bzw. einer Sensoreinheit SE1, ..., vorausschauend reagieren zu können, erhebt die Datenverarbeitungseinheit DV1, DV2 Informationen der Feldgeräte FG1, ..., FG5 durch Abhören des via dem Kommunikationsnetzwerk KN übertragenen Datenverkehrs oder durch direktes Abfragen der Feldgeräte FG1, ..., FG5. Bei den von den Feldgeräten FG1, ..., FG5 erhobenen Informationen handelt es sich um Informationen bezüglich des Typs der von deren Sensoreinheiten SE1, ..., SE5` erfassbaren Prozessgrößen, um Informationen über die geographische Lage der Feldgeräte FG1, ..., FG5, um Informationen über die Messstellen MS1, MS2, in welche die Feldgeräte FG1, ..., FG5 eingebaut sind, um Informationen über die Funktion der Feldgeräte FG1, ..., FG5 in den Messstellen MS1, MS2, um Informationen von den Sensoreinheiten SE1, ..., SE5` erhobenen Prozessgrößen und um Informationen über die Historiendaten der von den Sensoreinheiten SE1, ..., SE5` erhobenen Prozessgrößen. Des Weiteren wird der Gerätestatus der Feldgeräte FG1, ..., FG5, bzw. der Gerätestatus ihrer Sensoreinheiten SE1, ..., SE5` erhoben. Es kann auch vorgesehen sein, dass zumindest ein Teil dieser Informationen und/oder weitere Informationen bereits auf der Serviceplattform SP gespeichert ist, oder dass diese Informationen beispielsweise von Datenbanken des Anlagenbetreibers eingelesen werden.

In den Datenverarbeitungseinheiten DV1, DV2 ist jeweils ein KI-Algorithmus implementiert, welcher die abgehörten Daten ständig analysiert, Historiendaten untersucht und Trends detektiert, bspw. eine kontinuierlich steigende Abweichung der Prozesswerte einer Sensoreinheit SE1, ..., SE5` von den Historienwerten. Der KI-Algorithmus ist bereits eingelernt. Das Einlernen geschieht vorab auf der Serviceplattform SP mittels einer Vielzahl von Prozesswerte, Statusdaten, etc.

Um auf einen Ausfall eines Feldgeräts FG1, ..., FG5, bzw. einer Sensoreinheit SE1, ..., SE5` reagieren zu können, ohne dass der Prozess der Anlage A, bzw. der Messstellen MS1, MS2 unterbrochen werden muss, erstellt die Datenverarbeitungseinheit ein Ersetzungssystem ES. Dieses beinhaltet alle Sensoreinheiten SE1, ..., SE5` der Feldgeräte FG1, ..., FG5, deren erhobenen Prozessgrößen und für jede der Sensoreinheiten SE1, ..., SE5'jeweils eine Liste derjenigen Sensoreinheiten SE1, ..., SE5`, welche eine der Sensoreinheiten SE, ..., SE5` bei einem Ausfall als Ersatzgröße ersetzen kann. Hier kann vorgesehen sein, dass eine Datenverarbeitungseinheit DV1, DV2 zur Erstellung des Ersetzungssystems nur auf die Feldgeräte FG1, ..., FG5 seiner Messstelle MS1, MS2 zurückgreift und Feldgeräte weiterer Messstellen unberücksichtigt lässt. Alternativ kommunizieren, wie im vorliegenden Fall, die Datenverarbeitungseinheiten DV1, DV2 untereinander und erstellen ein globales Ersetzungssystem ES. Des Weiteren wird für jede der Ersatzgrößen eine Genauigkeit berechnet, mit welcher eine Ersatzgröße mit der zu ersetzenden Prozessgröße übereinstimmt. Das Erstellen des Ersetzungssystems ES wird ebenfalls mittels des KI-Algorithmus auf Grundlage des mitgehörten Datenverkehrs erstellt. Auch hier wird der KI-Algorithmus vorab auf der Serviceplattform SP eingelernt. Hierbei kann auf den Erfahrungsschatz bereits vorhandener Ersetzungssysteme, welche für weitere Anlagen erstellt wurden, zurückgegriffen werden und diese Erfahrung in die Erstellung des Ersetzungssystems ES einfließen. Hierfür übermittelt die Datenverarbeitungseinheit DV1, DV2 das erstellte Ersetzungssystem ES mitsamt Informationen über die Feldgeräte FG1, ..., FG5 und deren Sensoreinheiten SE, ..., SE5` an die Serviceplattform SP.

Im in Fig. 1 gezeigten Beispiel zeigt in einer ersten Variante der Temperatursensor SE2 des Feldgeräts FG2 einen Drift. Die Datenverarbeitungseinheit DV1 registriert diesen Drift und berechnet, dass der Temperatursensor nach einer bestimmten Zeitdauer, beispielsweise nach 3 Tagen, aus dem spezifizierten Werteintervall fällt. Weitere Methoden, um einen vorausschauenden Ausfall detektierten zu können, sind im Stand der Technik ausführlich beschrieben.

In einer zweiten Variante fällt der Temperatursensor SE2 des Feldgeräts FG2 einige Zeit nach Erstellen des Ersetzungssystems ES aus. Das Feldgerät wechselt in den Gerätestatus "Wartung erforderlich" und erfasst keine neuen Temperaturwerte mehr. Der neue Gerätestatus wird von der Datenverarbeitungseinheit DV1 registriert.

In beiden Fällen wendet anschließend das Ersetzungssystem ES an, bestimmt Ersatzgrößen für die ausgefallene Prozessgröße und vergleicht die Genauigkeit jeder der potentiellen Ersatzgrößen miteinander.

Im vorliegenden Beispiel werden zwei potentielle Ersatzgrößen bestimmt: Der erhobene Temperaturwert des Temperatursensors SE3` des Feldgeräts FG3, sowie der erhobene Temperaturwert des Temperatursensors SE5` des Feldgeräts FG5. Anschließend werden die Genauigkeiten der beiden potentiellen Ersatzgrößen miteinander verglichen. Die potentielle Ersatzgröße des Feldgeräts FG5 liefert hier eine niedrige, ungenügende Genauigkeit. Das Feldgerät FG5 befindet sich in einer zur Messstelle MS1 verschiedenen Messstelle MS2, so dass auch die Historiendaten der Feldgeräte FG2 und FG5 sehr voneinander abweichen.

Die potentielle Ersatzgröße des Feldgeräts FG3 zeigt eine hohe Genauigkeit. Das Feldgerät FG3 befindet sich in derselben Messstelle MS1, in welcher sich das Feldgerät FG2 befindet. Bis auf einen leichten Offset gleichen sich die Historiendaten der Feldgeräte FG2 und FG3, so dass die Ersatzgröße ausreichend gut die Temperatur des Messmediums in der Rohrleitung angibt.

Die Höhe des Offsets wird anhand des Vergleichs der Historiendaten der zu ersetzenden Prozessgröße mit den Historiendaten der Ersatzgröße bestimmt und als Abweichung gespeichert.

Anschließend kann eine Bewertung der Ersatzgröße berechnet werden. Diese wird aus der ermittelten Qualität der Ersatzgröße und den Historiendaten der Ersatzgröße berechnet. In diesem Fall wird eine hohe Bewertung erzielt, da neben der hohen Qualität der Ersatzgröße die Historiendaten wenig Schwankungen zeigen.

Anschließend wird die Ersatzgröße mitsamt dem Wert der Abweichung der übergeordneten Einheit SPS mitgeteilt. Diese korrigiert die Werte der Ersatzgröße laufend und leitet die aktuellen Werte der Ersatzgröße laufend an die Leitstelle LS der Anlage unter dem Vermerk "Ersatzgröße SE2" weiter, wo diese bis zur Wartung des Feldgeräts FG2 verwendet und ausgewertet werden können. Alternativ leitet die übergeordnete Einheit SPS den Wert der Abweichung an die Leitstelle LS weiter und korrigiert die aktuellen Werte der Ersatzgröße nicht.

Der große Vorteil des erfindungsgemäßen Verfahrens besteht darin, dass der Prozess nicht heruntergefahren werden muss und problemlos fortgeführt werden kann. Je nach Kritikalität des Prozesses muss die erforderliche Genauigkeit der Ersatzgröße allerdings entsprechend hoch gesetzt werden, um ein gefahrloses Weiterbetreiben des Prozesses gewährleisten zu können.

Die Ersatzgröße kann auch aus einer Kombination von mehreren Prozessgrößen von einer oder mehreren der Sensoreinheiten SE1, ..., SE5` gebildet werden. Beispielsweise können anstatt eines ausgefallenen radarbasierten Füllstandmessgeräts FG1, FG4 die Prozessgrößen mehrerer (in Fig. 1 nicht abgebildeter) Grenzschalter oder Druckmessgeräte kombiniert werden, um eine Ersatzgröße für den Füllstand in einem Tank von einer der Messstellen MS1, MS2 zu erhalten.

### Bezugszeichenliste

- A: Anlage der Automatisierungstechnik
- DV1, DV2: Datenverarbeitungseinheit
- ES: Ersetzungssystem
- FG1, FG2, FG3, FG4, FG5: Feldgerät
- KN: Kommunikationsnetzwerk
- LS: Leitstelle der Anlage
- MS1, MS2: Messstelle
- SE1, SE2, SE3, SE3', SE4, SE5, SE5`: Sensoreinheit
- SP: Serviceplattform
- SPS: übergeordnete Einheit, Steuerung

## Patentansprüche

1. Verfahren zum Kompensieren einer Fehlfunktion eines Feldgeräts in einer Anlage (A) der Prozessautomatisierung, wobei in der Anlage (A) eine Vielzahl von Feldgeräten (FG1, FG2, FG3, FG4, FG5) vorgesehen ist, wobei jedes der Feldgeräte (FG1, FG2, FG3, FG4, FG5) zumindest eine Sensoreinheit (SE1, SE2, SE3, SE3`, SE4, SE5, SE5') aufweist, welche zum Erheben von zumindest einer Prozessgröße ausgestaltet ist, wobei die Feldgeräte in zumindest einer Messstelle (MS1, MS2) eingruppiert sind, wobei die Feldgeräte (FG1, FG2, FG3, FG4, FG5) in einem Kommunikationsnetzwerk (KN) eingebunden sind und mit einer übergeordneten Einheit (SPS) kommunizieren, wobei die Feldgeräte (FG1, FG2, FG3, FG4, FG5) die erhobenen Prozesswerte, Diagnosedaten und Statusinformationen über das Kommunikationsnetzwerk (KN) an die übergeordnete Einheit (SPS) übermitteln, wobei die übergeordnete Einheit (SPS) die erhobenen Prozesswerte, Diagnosedaten und Statusinformationen an eine Leitstelle (LS) der Anlage (A) übermittelt und wobei jede Messstelle (MS1, MS2) eine Datenverarbeitungseinheit (DV1, DV2) umfasst, welche jeweils im Kommunikationsnetzwerk (KN) zwischen den Feldgeräten (FG1, FG2, FG3, FG4, FG5) der entsprechenden Messstelle (MS1, MS2) und der übergeordneten Einheit (SPS) angeordnet ist, umfassend:
- Mithören der von den Feldgeräten (FG1, FG2, FG3, FG4, FG5) an die übergeordnete Einheit (SPS) übermittelten Prozesswerte mittels der Datenverarbeitungseinheit (DV1, DV2);
- Erstellen von Historiendaten auf Basis der übermittelten Prozesswerte für jedes der Feldgeräte (FG1, FG2, FG3, FG4, FG5), bzw. der Sensoreinheiten (SE1, SE2, SE3, SE3`, SE4, SE5, SE5'), mittels der Datenverarbeitungseinheit (DV1, DV2);
**gekennzeichnet durch**:
- Etablieren eines Ersetzungssystems (ES) auf Basis der Historiendaten, wobei die Datenverarbeitungseinheit (DV1, DV2) im Zuge des Etablierens des Ersetzungssystems (ES) ermittelt, welche Prozessgröße einer Sensoreinheit (SE1, SE2, SE3, SE3`, SE4, SE5, SE5') eine Prozessgröße einer weiteren Sensoreinheit (SE1, SE2, SE3, SE3`, SE4, SE5, SE5') mit einer vorbestimmten Genauigkeit als Ersatzgröße ersetzen kann, wobei die Datenverarbeitungseinheit (DV1, DV2) einen KI-Algorithmus, insbesondere basierend auf neuronalen Netzwerken, zum Etablieren des Ersetzungssystems (ES) verwendet, wobei der KI-Algorithmus vorab auf einer Serviceplattform (SP) eingelernt wird und wobei der derart eingelernte Algorithmus vorab in die Datenverarbeitungseinheit (DV1, DV2) eingespielt wird;
- Vergleichen der aktuellen Prozesswerte von jedem der Feldgeräte (FG1, FG2, FG3, FG4, FG5), bzw. der Sensoreinheiten (SE1, SE2, SE3, SE3`, SE4, SE5, SE5'), mit Sollwerten, welche Sollwerte durch die Historiendaten und/oder durch vorab festgelegte Referenzwerte gebildet sind, zum Vorberechnen von Zeiträumen, in denen die aktuellen Prozesswerte eines jeweiligen Feldgeräts (FG1, FG2, FG3, FG4, FG5), bzw. der Sensoreinheiten (SE1, SE2, SE3, SE3`, SE4, SE5, SE5'), um zumindest einen vorbestimmten Wert von den Sollwerten abweichen;
- Übermitteln der Ersatzgröße für das jeweilige Feldgerät (FG1, FG2, FG3, FG4, FG5), bzw. der Sensoreinheiten (SE1, SE2, SE3, SE3`, SE4, SE5, SE5'), an die übergeordnete Einheit (SPS) mittels der Datenverarbeitungseinheit (DV1, DV2) während den vorberechneten Zeiträumen.

2. Verfahren nach Anspruch 1, wobei ein Gerätestatus der Feldgeräte (FG1, FG2, FG3, FG4, FG5) und/oder der Sensoreinheiten (SE1, SE2, SE3, SE3`, SE4, SE5, SE5') an die übergeordnete Einheit (SPS) übermittelt werden, insbesondere ständig oder zu festgelegten Zeitpunkten, und wobei im Falle des Auftretens zumindest eines vorbestimmten Gerätestatus eines Feldgeräts (FG1, FG2, FG3, FG4, FG5), bzw. einer Sensoreinheit (SE1, SE2, SE3, SE3`, SE4, SE5, SE5') die Ersatzgröße mittels der Datenverarbeitungseinheit (DV1, DV2) an die übergeordnete Einheit (SPS) übermittelt wird.

3. Verfahren nach Anspruch 1 oder 2, wobei im Zuge des Etablierens des Ersetzungssystems (ES) weitere Eigenschaften eines Feldgeräts (FG1, FG2, FG3, FG4, FG5), bzw. einer Sensoreinheit (SE1, SE2, SE3, SE3`, SE4, SE5, SE5'), an die Datenverarbeitungseinheit (DV1, DV2) übermittelt und verglichen werden, wobei die weiteren Eigenschaften Informationen bezüglich der geografischen Lage des Feldgeräts (FG1, FG2, FG3, FG4, FG5) beinhalten und/oder wobei die weiteren Eigenschaften Informationen bezüglich der Messstelle (MS1, MS2), in welche das Feldgerät (FG1, FG2, FG3, FG4, FG5) eingebaut ist, und/oder der Funktion des Feldgeräts (FG1, FG2, FG3, FG4, FG5) in der Messstelle (MS1, MS2) beinhalten.

4. Verfahren nach Anspruch 3, wobei die weiteren Eigenschaften von den Feldgeräten (FG1, FG2, FG3, FG4, FG5) an die Datenverarbeitungseinheit (DV1, DV2) übermittelt werden und/oder wobei die weiteren Eigenschaften von einer Serviceplattform (SP) an die Datenverarbeitungseinheit (DV1, DV2) übermittelt werden.

5. Verfahren nach zumindest einem der Ansprüche 3 oder 4, wobei im Zuge des Etablierens des Ersetzungssystems (ES) Historiendaten, Lageinformationen und/oder Informationen bezüglich einer Messstelle (MS1, MS2) von Feldgeräten (FG1, FG2, FG3, FG4, FG5) herangezogen werden, welche sich in zu der Anlage (A) verschiedenen, weiteren Anlagen befinden.

6. Verfahren nach Anspruch 1, wobei die Schritte des Etablierens des Ersetzungssystems (ES) und/oder des Vorberechnens der Zeiträume durchgeführt werden, ohne dass eine Kommunikationsverbindung zwischen der Datenverarbeitungseinheit (DV1, DV2) und der Serviceplattform (SP) besteht.

7. Verfahren nach Anspruch 2, wobei die Datenverarbeitungseinheit (DV1, DV2) eine Historie der Ersatzgröße mit den Historiendaten des Feldgeräts (FG1, FG2, FG3, FG4, FG5), bzw. der Sensoreinheit (SE1, SE2, SE3, SE3`, SE4, SE5, SE5'), welche den vorbestimmten Gerätestatus aufweist, vergleicht und eine Abweichung der Ersatzgröße zu den Historiendaten ermittelt.

8. Verfahren nach Anspruch 7, wobei die Datenverarbeitungseinheit (DV1, DV2) die Ersatzgröße in Echtzeit um die ermittelte Abweichung korrigiert.

9. Verfahren nach zumindest einem der vorherigen Ansprüche, wobei die Datenverarbeitungseinheit (DV1, DV2) eine Bewertung der ermittelten Ersatzgröße berechnet.

10. Verfahren nach Anspruch 9, wobei einem Bediener vor dem Übermitteln der Ersatzgröße die Bewertung der Ersatzgröße bekannt gemacht wird und wobei die Ersatzgröße nur dann übermittelt wird, wenn der Bediener diese bestätigt.

11. Verfahren nach Anspruch 2 und einem der Ansprüche 9 oder 10, wobei die Menge der Historiendaten des Feldgeräts (FG1, FG2, FG3, FG4, FG5), bzw. der Sensoreinheit (SE1, SE2, SE3, SE3`, SE4, SE5, SE5'), welche den vorbestimmten Gerätestatus aufweist, in das Berechnen der Bewertung miteinfließt.

## Claims

1. Method for compensating for a malfunction of a field device in a plant (A) for process automation, wherein a plurality of field devices (FG1, FG2, FG3, FG4, FG5) are provided in the plant (A), wherein each of the field devices (FG1, FG2, FG3, FG4, FG5) has at least one sensor unit (SE1, SE2, SE3, SE3', SE4, SE5, SE5'), which is designed to measure at least one process variable, the field devices being grouped into at least one measuring point (MS1, MS2), the field devices (FG1, FG2, FG3, FG4, FG5) being integrated into a communication network (KN) and communicate with a higher-level unit (PLC), wherein the field devices (FG1, FG2, FG3, FG4, FG5) transmit the collected process values, diagnostic data and status information via the communication network (KN) to the higher-level unit (PLC), wherein the higher-level unit (PLC) transmits the collected process values, diagnostic data and status information to a control center ( LS) of the plant (A), and wherein each measuring point (MS1, MS2) comprises a data processing unit (DV1, DV2) which is arranged in each case in the communication network (KN) between the field devices (FG1, FG2, FG3, FG4, FG5) of the corresponding measuring point (MS1, MS2) and the higher-level unit (SPS), comprising:
- monitoring the process values transmitted by the field devices (FG1, FG2, FG3, FG4, FG5) to the higher-level unit (PLC) by means of the data processing unit (DV1, DV2);
- creating history data based on the transmitted process values for each of the field devices (FG1, FG2, FG3, FG4, FG5) and the sensor units (SE1, SE2, SE3, SE3', SE4, SE5, SE5'), by means of the data processing unit (DV1, DV2);
**characterized by**:
establishing a replacement system (ES) on the basis of the historical data, the data processing unit (DV1, DV2) determining, in the course of establishing the replacement system (ES), which process variable of a sensor unit (SE1, SE2, SE3, SE3', SE4, SE5, SE5') can replace a process variable of a further sensor unit (SE1, SE2, SE3, SE3', SE4, SE5, SE5') with a predetermined accuracy as a replacement variable, the data processing unit (DV1, DV2) using an AI in particular based on neural networks, for establishing the replacement system (ES), the AI algorithm being taught in advance on a service platform (SP) and the algorithm taught in this way being imported in advance into the data processing unit (DV1, DV2);
comparing the current process values of each of the field devices (FG1, FG2, FG3, FG4, FG5) and of the sensor units (SE1, SE2, SE3, SE3', SE4, SE5, SE5'), with setpoint values, which setpoint values are formed by the history data and/or by predetermined reference values for precalculating time periods in which the current process values of a respective field device (FG1, FG2, FG3, FG4, FG5) or of the sensor units (SE1, SE2, SE3, SE3', SE4, SE5, SE5') deviate from the setpoints by at least a predetermined value;
transmitting the substitute variable for the respective field device (FG1, FG2, FG3, FG4, FG5) or the sensor units (SE1, SE2, SE3, SE3', SE4, SE5, SE5') to the higher-level unit (PLC) by means of the data processing unit (DV1, DV2) during the pre-calculated periods.

2. Method according to claim 1, wherein a device status of the field devices (FG1, FG2, FG3, FG4, FG5) and/or of the sensor units (SE1, SE2, SE3, SE3', SE4, SE5, SE5') is transmitted to the higher-level unit (PLC), in particular constantly or at fixed times, and wherein, in the event of the occurrence of at least one predetermined device status of a field device (FG1, FG2, FG3, FG4, FG5) or of a sensor unit (SE1, SE2, SE3, SE3', SE4, SE5, SE5'), the replacement variable is transmitted by means of the data processing unit (DV1, DV2) to the higher-level unit (PLC).

3. Method according to claim 1 or 2, wherein in the course of establishing the replacement system (ES), further properties of a field device (FG1, FG2, FG3, FG4, FG5) or of a sensor unit (SE1, SE2, SE3, SE3', SE 4, SE5, SE5'), to the data processing unit (DV1, DV2) and compared, wherein the further properties contain information regarding the geographical location of the field device (FG1, FG2, FG3, FG4, FG5) and/or wherein the further properties contain information regarding the measuring point (MS1, MS2) in which the field device (FG1, FG2, FG3, FG4, FG5) is installed and/or the function of the field device (FG1, FG2, FG3, FG4, FG5) in the measuring point (MS1, MS2).

4. Method according to claim 3, wherein the further properties are transmitted from the field devices (FG1, FG2, FG3, FG4, FG5) to the data processing unit (DV1, DV2) and/or wherein the further properties are transmitted from a service platform (SP) to the data processing unit (DV1, DV2).

5. Method according to at least one of claims 3 or 4, wherein in the course of establishing the replacement system (ES), historical data, location information and/or information relating to a measuring point (MS1, MS2) of field devices (FG1, FG2, FG3, FG4, FG5) are used, which are located in further systems different from the system (A).

6. Method according to claim 1, wherein the steps of establishing the replacement system (ES) and/or of precalculating the periods are carried out without a communication connection between the data processing unit (DV1, DV2) and the service platform (SP).

7. Method according to claim 2, wherein the data processing unit (DV1, DV2) compares a history of the replacement variable with the history data of the field device (FG1, FG2, FG3, FG4, FG5) or of the sensor unit (SE1, SE2, SE3, SE3', SE4, SE5, SE5'), which has the predetermined device status, and determines a deviation of the substitute variable from the history data.

8. Method according to claim 7, wherein the data processing unit (DV1, DV2) corrects the substitute variable in real time by the determined deviation.

9. Method according to at least one of the previous claims, wherein the data processing unit (DV1, DV2) calculates an evaluation of the determined substitute variable.

10. Method according to claim 9, wherein the evaluation of the substitute variable is made known to an operator before the substitute variable is transmitted and wherein the substitute variable is only transmitted if the operator confirms it.

11. Method according to claim 2 and one of claims 9 or 10, wherein the amount of history data from the field device (FG1, FG2, FG3, FG4, FG5) or the sensor unit (SE1, SE2, SE3, SE3', SE4, SE5, SE5'), which has the predetermined device status, is included in the calculation of the evaluation.

## Revendications

1. Procédé pour compenser un dysfonctionnement d'un appareil de terrain dans une installation (A) de l'automatisation de processus, une pluralité d'appareils de terrain (FG1, FG2, FG3, FG4, FG5) étant prévue dans l'installation (A), chacun des appareils de terrain (FG1, FG2, FG3, FG4, FG5) comportant au moins une unité de capteur (SE1, SE2, SE3, SE3', SE4, SE5, SE5'), qui est conçue pour relever au moins une grandeur de processus, les appareils de terrain étant regroupés dans au moins un point de mesure (MS1, MS2), les appareils de terrain (FG1, FG2, FG3, FG4, FG5) étant intégrés dans un réseau de communication (KN) et communiquant avec une unité supérieure (SPS), les appareils de terrain (FG1, FG2, FG3, FG4, FG5) transmettant les valeurs de processus relevées, les données de diagnostic et les informations d'état par l'intermédiaire du réseau de communication (KN) à l'unité de niveau supérieur (SPS), l'unité de niveau supérieur (SPS) transmettant les valeurs de processus relevées, données de diagnostic et des informations d'état à un poste de commande (LS) de l'installation (A) et chaque point de mesure (MS1, MS2) comprenant une unité de traitement de données (DV1, DV2) qui est disposée respectivement dans le réseau de communication (KN) entre les appareils de terrain (FG1, FG2, FG3, FG4, FG5) du point de mesure correspondant (MS1, MS2) et l'unité supérieure (SPS), comprenant :
- écouter les valeurs de processus transmises par les appareils de terrain (FG1, FG2, FG3, FG4, FG5) à l'unité supérieure (API) au moyen de l'unité de traitement des données (DV1, DV2) ;
- création de données d'historique sur la base des valeurs de processus transmises pour chacun des appareils de terrain (FG1, FG2, FG3, FG4, FG5), ou des unités de capteurs (SE1, SE2, SE3, SE3', SE4, SE5, SE5'), au moyen de l'unité de traitement de données (DV1, DV2) ;
**caractérisé par** :
- l'établissement d'un système de remplacement (ES) sur la base des données historiques, l'unité de traitement de données (DV1, DV2) déterminant, au cours de l'établissement du système de remplacement (ES), quelle grandeur de processus d'une unité de capteur (SE1, SE2, SE3, SE3', SE4, SE5, SE5') peut remplacer une grandeur de processus d'une autre unité de capteur (SE1, SE2, SE3, SE3', SE4, SE5, SE5') avec une précision prédéterminée comme grandeur de remplacement, l'unité de traitement de données (DV1, DV2) utilisant un algorithme d'intelligence artificielle, notamment basé sur des réseaux neuronaux, pour établir le système de remplacement (ES), l'algorithme d'intelligence artificielle étant préalablement appris sur une plate-forme de service (SP) et l'algorithme ainsi appris étant préalablement introduit dans l'unité de traitement de données (DV1, DV2) ;
- comparer les valeurs de processus actuelles de chacun des appareils de terrain (FG1, FG2, FG3, FG4, FG5), respectivement des unités de capteurs (SE1, SE2, SE3, SE3', SE4, SE5, SE5'), avec des valeurs de consigne, lesquelles valeurs de consigne sont formées par les données d'historique et/ou par des valeurs de référence fixées au préalable, afin de précalculer des périodes dans lesquelles les valeurs de processus actuelles d'un appareil de terrain respectif (FG1, FG2, FG3, FG4, FG5), respectivement des unités de capteurs (SE1, SE2, SE3, SE3', SE4, SE5'), doivent être calculées, des unités de capteurs (SE1, SE2, SE3, SE3', SE4, SE5, SE5'), s'écartent des valeurs de consigne d'au moins une valeur prédéterminée ;
- Transmettre la grandeur de remplacement pour l'appareil de terrain respectif (FG1, FG2, FG3, FG4, FG5), respectivement les unités de capteurs (SE1, SE2, SE3, SE3', SE4, SE5, SE5'), à l'unité de niveau supérieur (PLC) au moyen de l'unité de traitement de données (DV1, DV2) pendant les périodes précalculées.

2. Procédé selon la revendication 1, dans lequel un état d'appareil des appareils de terrain (FG1, FG2, FG3, FG4, FG5) et/ou des unités de capteurs (SE1, SE2, SE3, SE3', SE4, SE5, SE5') est transmis à l'unité supérieure (API), en particulier en permanence ou à des moments déterminés, et dans lequel, en cas d'apparition d'au moins un état d'appareil prédéterminé d'un appareil de terrain (FG1, FG2, FG3, FG4, FG5), respectivement d'une unité de capteurs (SE1, SE2, SE3, SE3', SE4, SE5, SE5'), l'unité supérieure (API) est informée de l'état d'appareil prédéterminé, d'une unité de détection (SE1, SE2, SE3, SE3', SE4, SE5, SE5'), la grandeur de remplacement est transmise à l'unité supérieure (SPS) au moyen de l'unité de traitement de données (DV1, DV2).

3. Procédé selon la revendication 1 ou 2, dans lequel, au cours de l'établissement du système de remplacement (ES), d'autres propriétés d'un appareil de terrain (FG1, FG2, FG3, FG4, FG5), respectivement d'une unité de capteur (SE1, SE2, SE3, SE3', SE4, SE5, SE5'), sont transmises à l'unité de traitement de données (DV1, DV2) et comparées, les autres propriétés comprenant des informations relatives à la position géographique de l'appareil de terrain (FG1, FG2, FG3, FG4, FG5) et/ou dans lequel les autres propriétés comprennent des informations concernant le point de mesure (MS1, MS2) dans lequel l'appareil de terrain (FG1, FG2, FG3, FG4, FG5) est installé et/ou la fonction de l'appareil de terrain (FG1, FG2, FG3, FG4, FG5) dans le point de mesure (MS1, MS2).

4. Procédé selon la revendication 3, dans lequel les autres caractéristiques sont transmises par les appareils de terrain (FG1, FG2, FG3, FG4, FG5) à l'unité de traitement de données (DV1, DV2) et/ou dans lequel les autres caractéristiques sont transmises par une plateforme de service (SP) à l'unité de traitement de données (DV1, DV2).

5. Procédé selon au moins l'une des revendications 3 ou 4, dans lequel, au cours de l'établissement du système de remplacement (ES), on utilise des données historiques, des informations de position et/ou des informations concernant un point de mesure (MS1, MS2) d'appareils de terrain (FG1, FG2, FG3, FG4, FG5) qui se trouvent dans d'autres installations différentes de l'installation (A).

6. Procédé selon la revendication 1, dans lequel les étapes d'établissement du système de remplacement (ES) et/ou de pré-calculdes périodes sont réalisées sans qu'une liaison de communication soit établie entre l'unité de traitement de données (DV1, DV2) et la plateforme de service (SP).

7. Procédé selon la revendication 2, dans lequel l'unité de traitement de données (DV1, DV2) compare un historique de la grandeur de remplacement avec les données d'historique de l'appareil de terrain (FG1, FG2, FG3, FG4, FG5), ou de l'unité de détection (SE1, SE2, SE3, SE3', SE4, SE5, SE5'), présentant l'état prédéterminé de l'appareil, et détermine un écart entre la grandeur de remplacement et les données d'historique.

8. Procédé selon la revendication 7, dans lequel l'unité de traitement de données (DV1, DV2) corrige en temps réel la grandeur de remplacement en fonction de l'écart déterminé.

9. Procédé selon au moins l'une des revendications précédentes, dans lequel l'unité de traitement de données (DV1, DV2) calcule une évaluation de la grandeur de remplacement déterminée.

10. Procédé selon la revendication 9, dans lequel l'évaluation de la grandeur de remplacement est portée à la connaissance d'un opérateur avant la transmission de la grandeur de remplacement et dans lequel la grandeur de remplacement n'est transmise que si l'opérateur la confirme.

11. Procédé selon la revendication 2 et l'une des revendications 9 ou 10, dans lequel la quantité de données d'historique de l'appareil de terrain (FG1, FG2, FG3, FG4, FG5), ou de l'unité de détection (SE1, SE2, SE3, SE3', SE4, SE5, SE5'), qui présente l'état d'appareil prédéterminé, est prise en compte dans le calcul de l'évaluation.
